# EUROPEAN PATENT APPLICATION

(11) **EP 3 343 192 A1**
(43) Date of publication of application: **04.07.2018**
(21) Application number: 16207243.3
(22) Date of filing: 29.12.2016
(51) Int. Cl.: G01L 3/12

(54) **OPTICAL TORQUE SENSOR**

(71) Applicant: Aros Electronics AB, 431 53 Mölndal (SE)
(72) Inventor: HELLSTRÖM, Jerker, 449 44 NOL (SE); LUNDBERG, Per, 427 35 Billdal (SE)
(74) Representative: AWA Sweden AB

(57) **Abstract**

An optical torque sensor (1) for measuring a torque on a rotating system having a shaft is presented. The optical torque sensor comprises two wedge prisms (3, 4) coupleable to an input portion and an output portion of the shaft. Furthermore, a light source (5) is arranged to emit a light beam through the wedge prisms toward an optical position sensor (6) which is arranged to receive the light beam and configured to provide a position signal indicative of a position of an incident light spot in the optical position sensor. The optical torque sensor further has control circuitry (30) configured to receive the position signal and to determine a torque value applied to the input portion based on this position signal. Hereby, a cost effective, robust, and compact optical torque sensor is presented, the sensor is particularly suitable for automotive applications such as power steering mechanisms. Also, a power steering system employing such an optical torque sensor is disclosed.

## Description

### FIELD OF THE INVENTION

The present invention relates generally a device for measuring the torque on a rotating system, and more specifically, to an optical sensor arrangement for measuring torque and position of a rotating shaft, such as e.g. a torsion bar in an electronic power steering system.

### BACKGROUND

Motor vehicles, such as cars, generally comprise a steering system with a steering wheel that controls one or more wheels in order to set a direction of travel for the motor vehicle. These steering systems, at least in modern motor vehicles, include power assisted steering or power steering for short, in order to help drivers steer by augmenting steering effort of the steering wheel. In short, power steering can be described as a system including hydraulic or electric actuators which add controlled energy to the steering mechanism so that the driver can provide less effort to turn the wheels when driving and to reduce the amount of turns needed from lock to lock.

Further, in such systems it is known to provide a sensor for sensing a torque input from the steering wheel, the sensed torque being used by a controller to determine the amount of steering assist to be provided. Various solutions have been proposed for providing a measurement of the sensed torque input to the steering wheel whereby, in general terms, a relative movement between an input shaft and an output shaft is sensed. In more detail, the input and output shafts may be connected by a so called torsion bar or torsion rod, having predetermined torsional characteristics that permit relative rotation between the input and output shafts. The twist of the torsion rod or relative rotation of the input and output shafts, i.e. the rotational displacement between two ends of the torsion rod is used to determine the input torque.

Torque sensors are often classified as contact type or non-contact type. An example of a contact type sensors is a sensor which measures the torsional stress applied to the torsion rod via conventional strain gauge technology, which converts torque into a change in electrical resistance. However, contact type torque sensors suffer from general disadvantages related to providing an electrical coupling to a rotating body by means of e.g. slip-rings or brushes which are expensive and deteriorate with age. Moreover, conventional strain gauge torque sensors cannot be used to determine the rotational position of the shaft.

Thus, the non-contact type torque sensors, such as e.g. magnetic, capacitive or optical, are generally preferable over the contact type torque sensors.

However, torque sensors utilizing magnetic sensors in combination with, magnetoelastic effects, circular polarized rings, magnetic discs, etc., where the input torque is determined from changes of magnetic flux density, are also prone to some general drawbacks related to structural complexity (tolerances), cost and/or size. Furthermore, some of the magnetic torque sensors require complex arrangements for supplying currents to moving components.

Furthermore, conventional optical sensors solutions such as for example optical discs having a pattern arranged thereon generally have low resolution and many times require much space. Examples of such optical sensors can be found in e.g. US 3,938,890 and US 7,784,364. Other optical solutions rely on having reflective patterns arranged on the torsion rod or on a body coupled to the torsion rod, as for example disclosed in US 7,559,258, KR 20120044435, and JP 5177890. However, such solutions are prone to some general drawbacks such as requiring relatively large amounts of space and a large number of components (multiple light sources, multiple sensors) which add to the cost of the overall torque sensor.

There is therefore a need for a new and improved non-contact torque and position sensor which is cost effective, robust (high manufacturing tolerances) and capable of high resolution measurements.

### SUMMARY OF THE INVENTION

It is therefore an object of the present invention to provide a torque sensor and a power steering system, which alleviates all or at least some of the above-discussed drawbacks of the presently known systems.

This object is achieved by means of a torque sensor as defined in the appended claims.

According to a first aspect of the present invention, there is provided an optical torque sensor for measuring a torque on a rotating system having a shaft with an extension axis and including an input portion and an output portion, wherein the input portion and output portion are angularly displaced with respect to each other when a rotational torque is applied to the input portion, said torque sensor comprising:
a first wedge prism coupleable to the input portion;
a second wedge prism coupleable to the output portion;
a light source adapted to be fixed relative to the shaft and configured to emit a light beam through the first and second wedge prisms;
an optical position sensor adapted to be fixed relative to the shaft and configured to receive said light beam from the light source through the first and second wedge prisms and to provide a position signal indicative of a position of an incident light spot on said optical position sensor;
control circuitry configured to receive said position signal and to determine a torque value applied to the input portion based on said position signal.

Hereby, a cost effective, robust, and compact optical torque sensor is presented, the sensor is particularly suitable for automotive applications such as power steering mechanisms. Moreover, the optical torque sensor is versatile and by merely exchanging certain components or adding further optical structures or building blocks the sensor can easily be adapted to conform with any particular needs for a wide variety of applications in terms of robustness, resolution and reliability, as will be exemplified in the embodiments to come. The inventive optical torque sensor may to some extent be construed as an analogue torque sensor.

A wedge prism (also known as optical wedges) is in the present context to be understood as a prism with an acute angle between the planes formed by its input and output surface. Wedge prisms are often used in optical applications for beam deviation, and particularly in laser technology, since an incident light beam is diverted toward its thicker portion during passage through the prism. Moreover, a wedge prism pair (also known as a Risley prism) is often used for beam steering applications, e.g. by placing two wedge prisms in close proximity to each other and counter-rotating the two prisms. The wedge prisms are preferably identical in terms of material and geometrical shape (i.e. apex angle, size, etc.). However, by having an initial calibration process when installing the torque sensor, prisms with differing geometry (e.g. different apex angles or wedge angles) or material properties (e.g. refraction index) can be used in the present optical torque sensor. The calibration process may for example include rotating the shaft and twisting the shaft by predetermined amounts of torque and measuring the position of the resulting light spot. The wedge prisms can be made of any suitable material as known in the art of optics, such as for example, glass (e.g. Borosilicate Crown glass), various plastics, fluorite, fused silica, etc.

Further, the term "angularly displaced" is in the present context to be understood as a relative rotational displacement about an elongated axis (i.e. extension axis for a shaft), or, in other words twisted. Moreover, the wedge prisms are coupleable to the different portions (input and output portion) of the shaft, meaning that they can be directly or indirectly coupled to the shaft such that each wedge prisms rotates when the corresponding portion of the shaft is subjected to a rotation (or angular displacement).

Accordingly, the present inventors realized that by suitably coupling a pair of wedge prisms to an input and an output portion of a shaft, a simple and cost effective sensor for measuring torque across the shaft can be obtained. In more detail, the present invention is based on the realization that the same optical properties that cause a light beam to deviate when passing through a wedge prism can advantageously be utilized in order to measure a torque applied on a shaft by measuring the aforementioned deviation, e.g. by detecting a position of a light spot formed by a light beam passing through a pair of wedge prisms which are suitably coupled to an input and an output portion of a shaft. In other words, instead of arranging optical elements to control a deviation of light, the same properties are used to detect a displacement of the optical elements by measuring the deviation of light.

Moreover, the optical torque sensor can be assembled and realized using rather simple and cost effective components in contrast to many of the known optical torque sensors which rely on more complex arrangements with encoded surfaces, such as the one described in US 6,817,528 which relies on optical elements having encoded surfaces forming Moire fringes.

The optical position sensor can for example be a continuous (i.e. analogue) or discrete position sensitive detectors (PSD), such as e.g. a charge-coupled device (CCD), a complementary metal-oxide-semiconductor (CMOS) sensor, or any suitable sensor or detector capable of detecting the position of a light spot on a surface. The light source can for example be a laser or point source emitter, a light emitting diode (LED) with suitable optical elements, etc.

Further, in accordance with an embodiment of the invention when the shaft is in a resting position, the first wedge prism and the second wedge prism are rotationally offset from an opposed position. The opposed position being defined in that the first and second wedge prisms are misaligned by 180° about a common rotational axis and the light beam is subjected to a minimum deviation when propagating through the first and second wedge prisms. The control circuitry can accordingly then be further configured to determine a rotational position of the shaft based on the position signal. Hereby, an optical torque sensor in which both wedge prisms are identical can be used to detect/determine the rotational position of the shaft. The term "rotationally offset from an opposed position", referring to the two wedge prisms, is in the present context to be understood as that the two wedge prisms are not in the opposed position in reference to a common rotational axis of the two wedges (i.e. the axis about which each or both of the wedge prisms are rotated in order to steer a light beam). The opposed position may further be understood as that the apexes of the wedge prisms are opposed (180° rotational angle), or in terms of optical properties, the two wedge prisms (or the Risley prism) does not achieve any net deviation of the light beam while in the opposed position, assuming that the apex angles and the refraction indices of the two wedge prisms are the same. If the two wedge prisms have differing properties (e.g. refraction index, wedge angle), the opposed position will result in a minimum deviation, but still a deviation and not just a translation of the light beam.

An aligned position would in the present case be that the two wedge prisms, together forming a Risley prism, are 0° offset with respect to each other in reference to their rotational axis. In terms of optical properties the aligned position results in a maximum deviation of an incident light beam. The terminology related to the relative positions of the two wedge prisms is considered to be readily understood by the skilled artisan, however, further discussions can be found in various scientific articles in the relevant technical field, see e.g. Schwarze CR, et. al., "Risley prism scan-based approach to standoff trace explosive detection", Opt. Eng. 0001;53(2):021110, doi:10.1117/1.OE.53.2.021110.

In yet another embodiment of the present invention, when the shaft is in a resting position, the first wedge prism and the second wedge prism are rotationally offset by 1° - 179° relative to each other. In other words, the wedge prisms are rotationally offset from both an opposed position and an aligned position when the shaft is in a resting position. For example, the wedge prisms may be arranged to be rotationally offset by 90° ± 45° relative to each other when the shaft is in a resting position. This is advantageous in order to achieve good resolution in determining the rotational position of the shaft as well as maximizing the operational range of the optical sensor. The operational range being defined as how many degrees the input portion of the shaft can be twisted before the torque sensor is unable to unambiguously determine the torque value and torque direction based on the position of the bright spot alone.

Further, in accordance with an embodiment of the present invention, the first and second wedge prisms share a common axis with the shaft. For example, the two wedge prisms may be arranged coaxially about the input and output portion, respectively. In other words, the first wedge prism and the second wedge prism are arranged to rotate about the extension axis of the shaft. However, other suitable arrangements are feasible, e.g. the two wedge prisms may be mechanically coupled to the shaft by a suitably disposed gearing arrangement. This may be advantageous if the sensor must be disposed away from the shaft, due to e.g. lack of space around the shaft.

Even further, and in accordance with another embodiment of the present invention, the optical position sensor is arranged in a focal plane of the light source. By arranging the optical position source in the focal plane of the light source (or a lens of the light source) the resolution of the overall torque sensor can be increased.

Further, the optical position sensor can in an embodiment of the invention, be a two-dimensional optical detector. By using a two-dimensional optical detector (e.g. a two dimensional PSD), which is illuminated by a point source emitter (e.g. laser or point source LED with an appropriate lens arrangement), a rather simple and accurate detection of the relative displacement between the two prisms can be achieved. For example, the light source can be configured such that said incident light spot forms a bright dot on the two-dimensional optical detector, and the optical torque sensor is accordingly arranged such that the bright dot follows a circular path on the two-dimensional optical detector during rotation of said shaft.

Furthermore, in yet another embodiment of the invention, the control circuitry is configured to: determine the torque value based on a radius of the circular path and a rotational positon of the shaft based on a position of the bright dot on the circular path. Thus, once the torque sensor has been calibrated, i.e. proper reference values have been stored by the control circuitry based on a calibration process in which the shaft of the rotating system is for example rotated a full rotation with different known torque values applied to the input portion of the shaft, the torque value and rotational position may be determined based on the detected position of the bright dot on the two-dimensional optical detector. As previously discussed, a relative rotation between the two wedge prisms cause a deviation of the light beam that is dependent on the relative rotational offset between the two wedge prisms. Accordingly, a subsequent rotation of the shaft, i.e. rotating the two wedge prims together, will result in the bright dot sweeping along an arc on the two-dimensional optical detector.

Even further, in accordance with another embodiment of the present invention, the optical torque sensor further comprises a reflective member (e.g. a mirror) having a reflective surface, and wherein light source is arranged to emit the light beam towards the optical position sensor via the reflective surface in order to increase a travel distance of the light beam. Hereby, the optical position sensor and the light source can be arranged on the same circuit board which reduces complexity and cost of the overall torque sensor. In more detail, it reduces the need for complex electrical coupling arrangements between various parts or components.

Even further, in accordance with yet another embodiment of the present invention, the optical position sensor is a one-dimensional optical detector, and wherein said light source is configured such that said incident light spot forms a bright line on said one-dimensional optical detector. Hereby, the optical torque sensor can be made more cost effective. In more detail, two dimensional optical detectors are generally more costly and require more processing power than one-dimensional optical detectors since there are more pixels and consequently more data points associated with the two-dimensional optical detector. The emittance of a bright line can for example be achieved by means of a cylinder lens as known in the art of optics. Furthermore, the control circuit can then for example be configured to determine the torque value based on a position of the bright line on the one-dimensional optical detector, and a rotational positon of the shaft based on an intensity of the bright line. In more detail, the bright line will sweep across the one-dimensional optical detector upon a rotational displacement of the first wedge prism in reference to the other (i.e. applied torque) or upon a rotational displacement of both of the wedge prisms (i.e. rotation of the shaft). This is because a center point of the bright line will still follow a circular path which translates into a linear movement perceived by the one-dimensional optical detector, where two rotational positions 180° apart will correspond to the same position of the bright line on the optical detector. However, due to the fact that the light beam will pass through different sectors of the prisms in those two positions that are 180° apart, the two positions can be differentiated by measuring (or sensing) the intensity of the light. This will however be further discussed and exemplified with reference to the appended drawings in the detailed description of the present application. Also, compared to the embodiments of the present invention utilizing other optical position sensors (e.g. two-dimensional optical detectors) this solution (i.e. utilizing a one-dimensional optical detector for detecting both input torque and rotational position) is as mentioned more cost effective, the trade-off may be decreased resolution, i.e. less precise.

Even further, in accordance with yet another embodiment of the present invention, the optical torque sensor further comprises a right angle prism arranged along a path of the light beam between the optical position sensor and the first and second wedge prisms in order to split the light beam and direct a split light beam towards a second optical position sensor, the second optical position sensor being a second one-dimensional optical detector. This increases the robustness of the optical torque sensor since it is now possible for one optical position sensor to malfunction or break down and still detect torque and/or position with the other optical position sensor. The same arrangement including a right angle prism is analogously applicable in the embodiment utilizing two-dimensional optical detectors.

Furthermore, in accordance with yet another embodiment the light source is a first light source configured to emit a first light beam such forming a first bright line and the one-dimensional optical detector is a first one-dimensional optical detector, the optical torque sensor further comprising: a second light source configured to emit a second light beam forming a second bright line on a second one-dimensional optical detector, the first and second bright lines being 90° offset relative to each other. Hereby it is possible to achieve the same or better resolution to a lower cost as compared to the embodiment utilizing two-dimensional optical detectors. Moreover, robustness is increased since, as previously discussed, one light source and/or one of the one-dimensional optical detectors may malfunction or break down while one can still detect torque and/or position with the other optical position sensor by using the same principles as discussed above.

In accordance with another aspect of the present invention there is provided a power steering system for turning a set of wheels of a vehicle. The power steering system comprises:
an input element rotational about a first axis;
an output element rotational about said first axis;
a torsion rod connecting said input member to said output member, said torsion rod being adapted to twist about said first axis when a rotational torque is applied to said input member;
a first wedge prism rotationally coupled to the input portion;
a second wedge prism rotationally coupled to the output portion;
an optical position sensor fixed relative to the shaft and configured to receive said light beam from the light source through the first and second wedge prisms and to provide a position signal indicative of a position of an incident light spot on said optical position sensor;
control circuitry configured to receive said position signal and to determine a torque value applied to the input portion based on said position signal.

With this aspect of the invention, similar advantages and preferred features are present as in the previously discussed aspects of the invention.

These and other features of the present invention will in the following be further clarified with reference to the embodiments described hereinafter.

### BRIEF DESCRIPTION OF THE DRAWINGS

For exemplifying purposes, the invention will be described in closer detail in the following with reference to embodiments thereof illustrated in the attached drawings, wherein:
Figs. 1a - 1 d illustrate perspective views of an optical torque sensor and an associated rotating system having a shaft, where the shaft is rotated sequentially from Fig. 1a to Fig. 1 d in order to show the resulting circular path of a bright dot on an optical position sensor, in accordance with an embodiment of the present invention;
Fig. 2 illustrates a partly exploded perspective view of an optical torque sensor in accordance with an embodiment of the present invention;
Figs. 3a - 3b illustrate perspective views of three different configurations of a Risley prism;
Fig. 4a illustrates a perspective view of an optical torque sensor for measuring a torque on a rotating system having a shaft, when torque is applied to an input portion of the shaft, in accordance with an embodiment of the present invention;
Fig. 4b illustrates a perspective view of the optical torque sensor of Fig. 4a, when a different amount of torque is applied to the input portion of the shaft, in accordance with an embodiment of the present invention;
Fig. 5 illustrates a perspective view of an optical torque sensor comprising a reflective member, in accordance with an embodiment of the present invention;
Fig. 6a illustrates a perspective view of an optical torque sensor comprising two light sources and two one-dimensional optical detectors, in accordance with an embodiment of the present invention;
Fig. 6b illustrates a perspective view of an optical torque sensor comprising one light source and one one-dimensional optical detector, in accordance with another embodiment of the present invention;
Figs. 7a - 7b schematically illustrate the resulting bright line formed on a surface of the one-dimensional optical detectors of for various rotational positions of the shaft illustrated in Fig. 6a, in accordance with an embodiment of the present invention;
Fig. 8 illustrates a perspective view of an optical torque sensor comprising a right angle prism, in accordance with an embodiment of the present invention.

### DETAILED DESCRIPTION

In the following detailed description, preferred embodiments of the present invention will be described. However, it is to be understood that features of the different embodiments are exchangeable between the embodiments and may be combined in different ways, unless anything else is specifically indicated. Even though in the following description, numerous specific details are set forth to provide a more thorough understanding of the present invention, it will be apparent to one skilled in the art that the present invention may be practiced without these specific details. In other instances, well known constructions or functions are not described in detail, so as not to obscure the present invention.

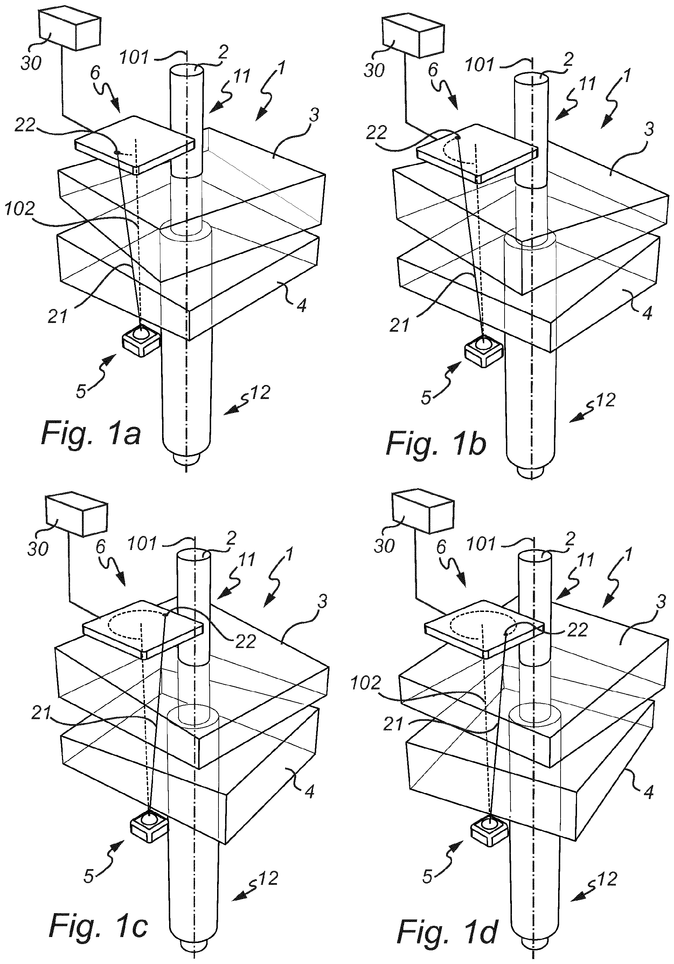

Each of Figs. 1 a - 1 d illustrate an optical torque sensor 1 for measuring a torque on a rotating system having a shaft 2 with an extension axis 101 (may also be referred to as an elongated or longitudinal axis). The shaft also has an input portion 11 and an output portion 12, schematically illustrated herein. The input portion 11 and output portion 11 are angularly displaced with respect to each other when a rotational torque is applied to the input portion 11, i.e. about the extension axis 101, i.e. the shaft 2 is twisted about the extension axis 101. In for example a power steering system, the input portion 11 and output portion 12 can for example be connected by a torsion rod (not shown).

The torque sensor 1 comprises a first wedge prism 3 rotationally coupled to the input portion, and a second wedge prism rotationally coupled to the output portion. In this particular embodiment the two wedge prisms 3, 4 are coaxially arranged about each respective portion of the shaft 2, such that they share a common rotational axis 101, i.e. the wedge prisms 3, 4 rotate when the shaft 2 is rotated. Moreover, the torque sensor includes a light source 5 adapted to be mounted in a fixed position relative to the shaft 2, i.e. the light source 5 is kept still while the shaft 2 (and the wedge prisms 3, 4) are free to rotate about the extension axis 101. The light source 5 is configured to emit a light beam 21 through the two wedge prisms 3, 4 (directly or indirectly) toward an optical position sensor 6, which also is mounted in a fixed position relative to the shaft 2. The light source 5 can for example be a laser or point source emitter, a light emitting diode (LED) with suitable optical building blocks (e.g. collimating lenses), or any other light source capable of emitting light coherently (spatial coherence).

The optical position sensor 6 is arranged to receive the light beam 21 from the light source 5 after it has been transmitted through the wedge prisms 3, 4. The optical position sensor 6 is accordingly configured to provide a position signal which is indicative of a position of an incident (resulting) light spot 22 formed on a receiving surface of the sensor 6. The light spot 22 is here in the form of a bright dot, although other suitable shapes area feasible, and considered to be covered by the term "light spot", such as, e.g. square, polygonal, rectangular, etc. The optical position sensor 6 can for example be a discrete or continuous position sensitive detector (PSD), such as e.g. a charge-coupled device (CCD), a complementary metal-oxide-semiconductor (CMOS) sensor, or any suitable sensor or detector capable of detecting the position of a light spot on a surface.

Further, the optical torque sensor 1 includes control circuitry 30 (may also be referred to as a controller or control unit), schematically indicated herein, which is configured to receive the position signal detected or sensed by the optical position sensor 6 and determine a torque value applied to the input portion 11 of the shaft 2 based on this position signal. Even though not explicitly indicated in the illustration, the control circuitry 30 may also be connected to the light source 5 in order to control the light source 5 and to monitor the status of the light source 5.

The position of the light spot 22 depends on the path of the light beam 21 through the wedge prisms 3, 4, which in turn depends on the relative angular displacement about the extension axis 101 between the two wedge prisms 3, 4. In more detail, by applying a rotational torque to the input portion 11 of the shaft 2 the first wedge prism 3 (i.e. the wedge prism coupled to the input portion 11) will be angularly/rotationally displaced about the extension axis 101 of the shaft 2 relative to the second wedge prism 4 (i.e. the wedge prism coupled to the output portion 12). In other words, the first wedge prism 3 will be rotated relative to the second wedge prism 4 about their common central rotational axis, which is this embodiment aligns with the extension axis 101 of the shaft 2.

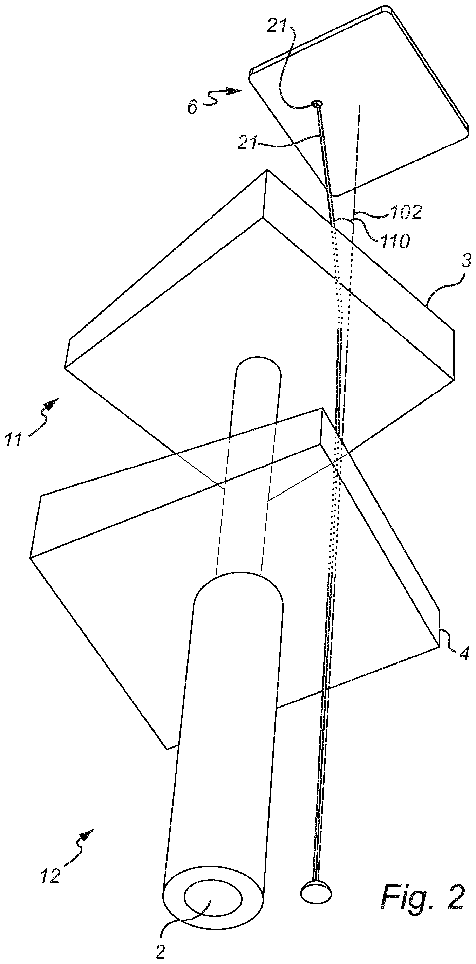

This is caused by the incoming beam of light 21, having a first vector, entering one of the wedge prisms (the second wedge prism 4 in this particular example) and experiences a series of refractions given by Snell's law and emerges from the other wedge prism (the first wedge prism 3 in this particular example) with a second vector, the degree or angle of deviation (see ref. 110 in Fig. 2) depends on the relative rotational position of the two wedge prisms (which together form a Risley prism). Further details regarding the physics of the light beam deviation related to the optical properties of the wedge prisms are considered to be readily known by the skilled artisan, and will for the sake of brevity be omitted in the following. However, more a detailed analysis can for example be found in various scientific articles such as e.g. M. Ostaszewski, S. Harford, N. Doughty, C. Hoffman, M. Sanchex, D. Gutow, R. Pierce, "Risley prism beam pointer", Proc. SPIE Free-Space Laser Communications VI, vol. 6304, pp. 630406.1-630406.10, 2006.

However, in short it can be said that the light beam 21 experiences a series of refractions and redirections as known from Snell's law, and from this the control circuitry 30 can be configured to compute a relative angular displacement between the input portion 11 and output portion 12 of the shaft 2 from the position of the resulting light spot 22 based on predefined input data comprising: the wedge angles of the wedge prisms 3,4, and the relative distances between each of the light source 5, the wedge prisms 3, 4 and the optical position sensor 6. Further, given the material properties of the shaft 2 the control circuitry 30 can be configured to derive an input torque value based on the computed relative angular displacement.

Furthermore, even if the optical torque sensor 1 comprises rectangular wedge prisms 3, 4 in the illustrated embodiments, it is readily understood by the skilled artisan that the optical torque sensor 1 may comprise wedge prisms of polygonal or circular shape without departing from the scope of the present invention as defined in the appended claims. The rectangular shape was chosen in the illustrated embodiments in order to more clearly elucidate the invention. Furthermore it is envisioned that circular wedge prisms are advantageous in terms of reducing size of the optical torque sensor due to their rotational symmetry.

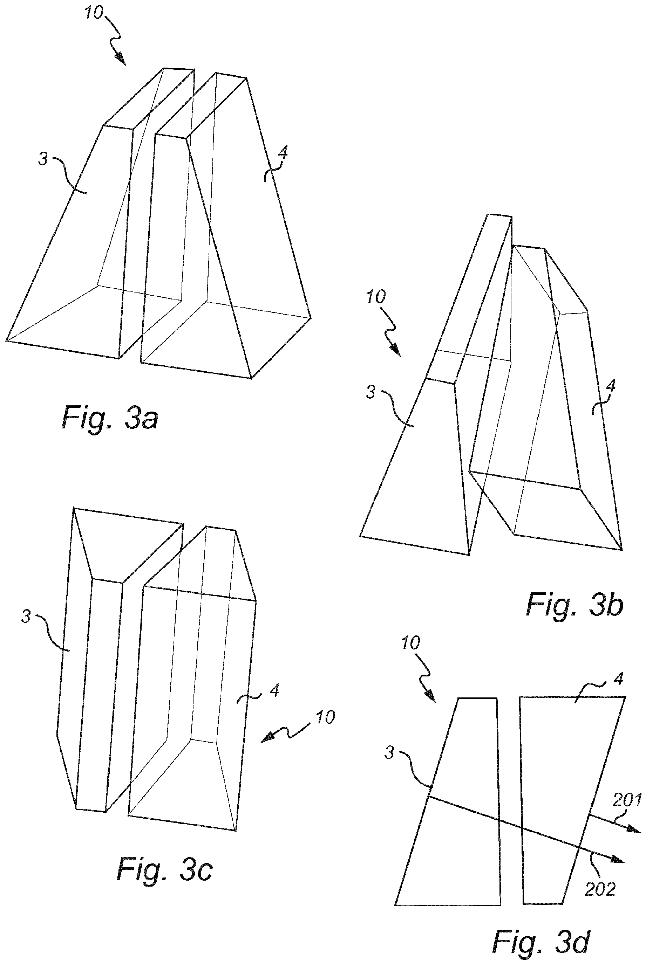

Even further, the two wedge prisms 3, 4 are preferably rotationally offset from an opposed position when the shaft is in a resting position (i.e. no torque applied). The opposed position is to be understood as a position in which the first and second wedge prisms are misaligned by 180° about the extension axis 101 of the shaft 1 (c.f. Fig. 3c and 3d which show two wedge prisms arranged in an opposed position). If the two wedge prisms 3, 4 of the optical torque sensor 1 are identical in terms of optical properties, the two wedge prisms should be rotationally offset (or rotationally misaligned) from the opposed position in order to be able to detect a rotational position of the shaft (i.e. how many degrees the shaft 2 is rotated about its extension axis 101).

Figs. 3a - 3d illustrate some different spatial configurations of a Risley prism 10 which consists of two wedge prisms 3, 4 in the present example. Fig. 3a illustrates a Risley prism in which the two wedge prisms 3, 4 are arranged in an aligned position, this position may also be defined in that the wedge normals of the two prisms (c.f. references 201, 202 in Fig. 3d) are not parallel. Fig. 3b illustrates a Risley prisms in which the two wedge prisms 3, 4 are rotationally or angularly offset by an acute angle, while Fig. 3c illustrates a Risley prism in which the two wedge prisms are arranged in an opposed position. Further, regarding the opposed position illustrated in Figs. 3c and 3d, if the two wedge prisms 3, 4 are identical, a beam of incoming light will only be translated, i.e. the vectors defining the input beam and the output beam will travel in parallel directions. An alternative way to define the opposed position as illustrated in Figs. 3c - 3d is to say that the wedge normals 201, 202 are parallel or aligned.

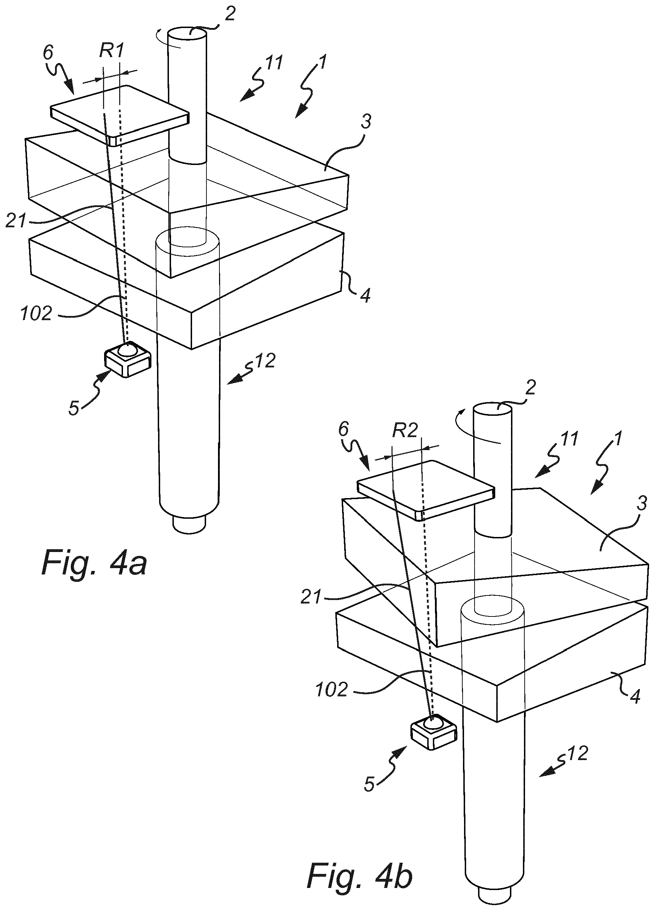

Yet further, as illustrated in Figs. 1 a - 1 d, the resulting bright spot on the optical position sensor 6 follows a circular path when the whole shaft 2 is rotated, thus by detecting the position of the bright spot 22 along this circular path, the rotational position of the shaft can be determined. By applying a rotational torque to the input portion 11 of the shaft 2, the bright spot 22 will move in a radial direction instead (cf. references R1 and R2 in Figs. 4a and 4b). Thus, in other words, the torque value and rotational position are determined from the radius of a circle and position along a circumference of that circle, respectively.

For example, when the shaft 2 is in a resting position, the first wedge prism 3 and the second wedge prism 4 are preferably arranged to be rotationally offset by an angle in the range from 1° to 179° relative to each other. In other words, the wedge prisms 3, 4 are rotationally offset from both the opposed position (Fig. 3c and 3d) and the aligned position (Fig. 3a) when the shaft 2 is in a resting position. For example, the wedge prisms may be arranged to be rotationally offset by 90° relative to each other when the shaft is in a resting position. This is advantageous in order to achieve good resolution for determining the rotational position of the shaft 2 as well as maximizing the operational range of the optical torque sensor 1. The operational range is defined as how many degrees the input portion 11 of the shaft 2 can be twisted before the torque sensor is unable to unambiguously determine the torque value based on the position of the bright spot alone (more specifically from the radius (R1, R2 in Fig. 4a - 4b) defined by the bright spot. This is because if we start from the aligned position (Fig. 3a) and rotate the first prism 3 in reference to the other prism 4 the bright dot will move along the same path (decreasing radius) regardless of which direction the first prism 3 is rotated, i.e. the direction of the applied torque to the input portion cannot be determined. Thus, by having the prisms 3, 4 rotationally offset by 90° in a starting position (resting position of the shaft 2) the input portion 11 of the shaft 2 can be angularly displaced by 90° in both directions relative to the output portion 12. In the latter scenario, depending on the direction of the applied torque to the input portion 11, the radius defined by the distance between the bright spot and an optical axis 102 will increase or decrease.

Fig. 2 illustrates a partly exploded perspective view of an optical torque sensor 1. The illustration schematically shows how the light beam 21 deviates from an optical axis 102 by an angle 110 after passage through both of the wedge prisms 3, 4.

Figs. 4a - 4b illustrate an optical torque sensor in accordance with the embodiments shown in Figs. 1 a - 1 d and Fig 2. However, in Fig. 4a, a first predefined magnitude of torque is applied the input portion 11 of the shaft 2 which results in a bright spot 22 being formed on the optical position detector 6. The bright spot 22 is formed on a distance R1 from an optical axis 102 of the light source 5. Next, the input portion 11 of the shaft 2 is subjected to a second magnitude of torque, as illustrated in Fig. 4b, the second magnitude being larger than the first. This results in a translation of the bright spot 22 to a second position which is disposed on a distance R2 from the optical axis 102 of the light source 5. Thus, there is a functional relation between the magnitude of the applied torque to the input portion and the deviation of the light beam, and more specifically, the "radius" of the circular path of the bright spot 22. Moreover, when the shaft 2 is rotated the bright spot moves along an arc or circular path (c.f. Figs. 1 a - 1 d showing a trace of the circular path on the optical position detector 6). Accordingly, by tracking the position of the light spot on the optical position detector, simple and efficient means for measuring torque and rotational position in a rotating system is achieved.

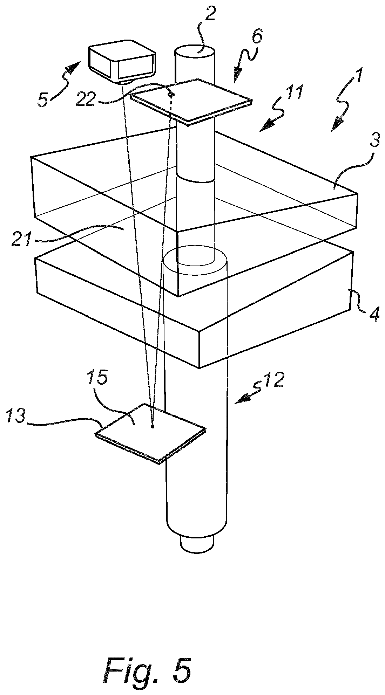

In Fig. 5 a perspective view of an optical torque sensor 1 comprising a reflective member 13 in accordance with an embodiment of the present invention. In more detail, the light source 5 is arranged to emit a light beam through the wedge prisms 3, 4 toward a reflective surface 15 of the reflective member 13, which light beam is accordingly reflected by the reflective surface 15 and directed towards an optical position sensor 6, via the wedge prisms 3, 4 again. The optical torque sensor 1 further has control circuitry (not shown here) which is configured to determine a torque value applied to the input portion 11 based on a position signal generated by the optical position sensor 6. The position signal being indicative of a position of a light spot (here in the form of a bright dot 22) on the optical position sensor 6, in analogy with the previously discussed embodiments in reference to Figs. 1 - 4. Hereby, the travel distance of the light beam is efficiently increased which not only increases the overall resolution of the optical torque sensor 1 (due to the dependence between the deviation of the light spot 22 on the optical position sensor 6, and the distance from the "output" surface of the second wedge prism 4), but also allows for arranging the electronic components (light source 5 and optical position sensor 6) on the same circuit board. This is advantageous as it effectively reduces the need for complex couplings and electrical wiring between the components.

Moreover, the light source 5 and reflective member 13 may be arranged such that the light beam passes through both of the wedge prisms 3, 4 twice before it is received by the optical position sensor 6, as illustrated in Fig. 5, which further increases the space efficiency since the optical position sensor 6 and light source 5 can be placed closer to each other. However, in some applications it may be desirable to place the light source 5 further away from the optical position sensor 6, whereby the light source 5 and reflective member 13 can be arranged such that the light beam passes through both of the wedge prisms 3, 4 only once before it is received by the optical position sensor 6. The light beam can then either pass through the wedge prisms 3, 4 when traveling from the light source 5 to the reflective member 13 or when traveling from the reflective member to the optical position sensor 6.

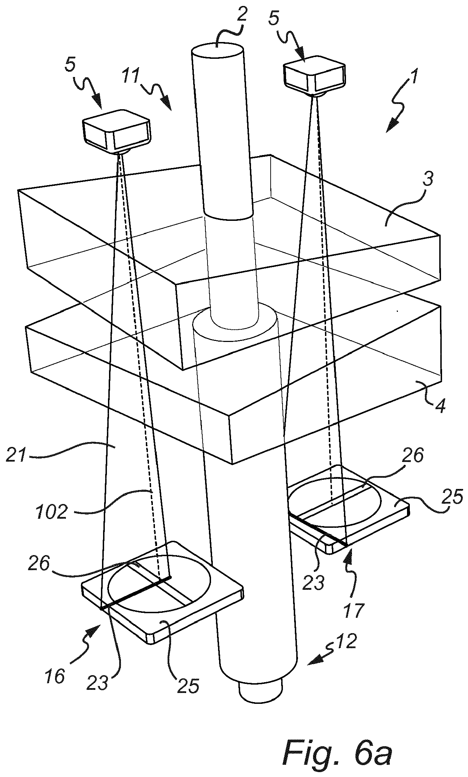

In Fig. 6a, a perspective view of an optical torque sensor 1 in accordance with another embodiment of the present invention. In more detail the torque sensor comprises two light sources 5, where each light source is configured to emit a light beam 21 such that a bright line 23 is formed on the receiving sensor surface 25. The optical position sensors are in this embodiment illustrated in Figs. 6a - 6b in the form of one-dimensional optical detectors 16, 17 (e.g. one-dimensional PSDs). The one-dimensional optical detectors 16, 17 are configured to detect or sense the position of the bright line 23 on the active area 26 of the sensor 16, 17. Properties and basic function of such devices are readily known by the skilled artisan and need not be further discussed.

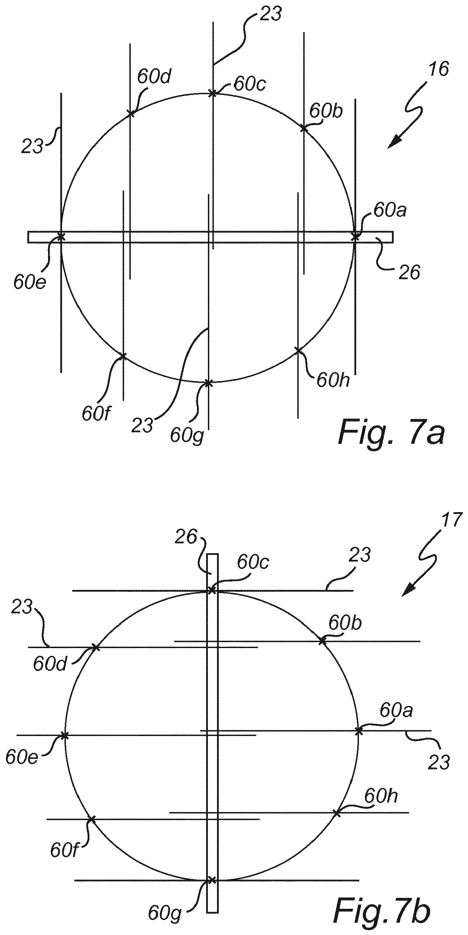

The operating principles of the optical torque sensor 1 are analogous as in the previous embodiments using two-dimensional optical detectors. However, the cost of the optical torque sensor 1 is reduced by utilizing one-dimensional optical detectors instead of two-dimensional optical detectors. As illustrated in Figs. 7a - 7b, the bright line 23 will translate along the extension axis of the active area 26 of the sensor 16, 17 when the shaft 2 rotates about its extension axis. This is because the bright line 23, or more specifically, a center point 60a - 60h of the bright line, will move along the periphery or circumference of a circle when the shaft 2 and the two wedge prisms 3, 4 rotate about the extension axis 101 of the shaft, i.e. analogously to the previously discussed embodiments in e.g. Fig. 1 a - 1 d. However, as indicated in Figs. 6a - 6b, a full turn of the shaft 2, i.e. 360°, results in the bright line 23 moving from position 60a, to 60b, 60c, 60d, etc. all the way through 60h and back to 60a again.

However, as one may note, the one-dimensional optical detector 6 cannot differentiate two rotational positions of the shaft 2 that are 180° apart, solely based on the position of the bright line 23, c.f. position 60c and 60g which would result in almost the same positional signal. However, by suitably arranging a second one-dimensional optical detector 17 to be 90° offset to the first one-dimensional optical detector 16, it is possible to achieve full resolution based on the position of the two bright lines 23 alone. The light sources 6 are accordingly arranged to emit a light beam 21 forming two bright lines 23 which are 90° offset relative to each other. In more detail, the second optical position detector 17 preferably has an active area 26 that extends in a parallel plane as the active area 26 of the first one-dimensional optical detector 16, albeit 90° offset. In other words, the active areas of the two optical position sensors 16, 17, as well as the bright lines 23, extend in perpendicular directions.

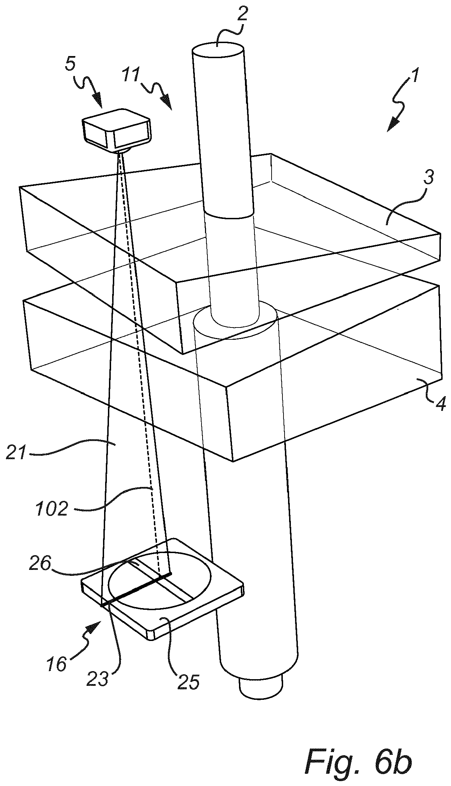

Furthermore, in another embodiment of the present invention (illustrated in Fig. 6b), the optical torque sensor 1 is only provided with one light source 5 and only one one-dimensional optical detector 16. The control circuitry is in this embodiment instead configured to determine a torque value applied to the input portion 11 and rotational position of the shaft 2 based the position of the bright line 23 on the one-dimensional optical detector 16 and the intensity of the bright line 23. In more detail, the intensity of the light forming the bright line 23 will vary as the shaft 2 rotates since the light will pass through different segments of the prisms which have varying thickness. To amplify this effect and increase the differences in amplitude of the intensity of the bright line between different rotational positions, one may arrange the first wedge prism 3 to be thicker than the second wedge prism 4. In other words, it will be easier to sense the difference in intensity for when the light beam 21 passes through the thicker portions of the second wedge prism 4 as compared to when the light beam 21 passes through the thinner portions, i.e. making it possible to determine rotational position of the shaft based on the intensity and position of the bright line 23. Other ways to amplify this effect includes suitably arranging the material properties of the wedge prisms such that for example one of the wedge prisms 3, 4 is made of an opaquer material, making this "opaque" wedge prism the dominant factor of the intensity of the bright line.

However, in yet another embodiment of the present invention (not illustrated), the optical torque sensor may comprise two light sources, each arranged to emit a light beam which forms a bright line on the same one-dimensional optical detector. However, the light sources are arranged such that the resulting bright lines are 90° offset in reference to each other (i.e. similar to Fig. 6a). The first light source is in this embodiment configured to emit a light beam which forms a bright line that is 90° offset relative to the extension direction of the active area of the one-dimensional optical detector while the second light source emits a light beam that forms a bright line that extends in parallel to the extension direction of the active area of the one-dimensional optical detector. However, the optical torque sensor further comprises an optical building block (e.g. a dove prism arranged between the light source and the one-dimensional optical detector) configured to rotate the light beam emitted by the second light source by 90° before the light hits the one-dimensional optical detector. Accordingly, the control circuit is further configured to control the light sources such that they alternatingly (in time) illuminate the one-dimensional optical detector. The two bright lines will thus contain different pieces of information regarding the position of the wedge prisms in reference to each other (c.f. Figs. 7a - 7b) but can be read by one single one-dimensional optical detector. Moreover, this embodiment is advantageous in terms of robustness since if one of the light sources would malfunction the control circuitry can be re-configured to detect position and intensity of the remaining bright line instead in order to be able to sense torque and rotational position of the shaft.

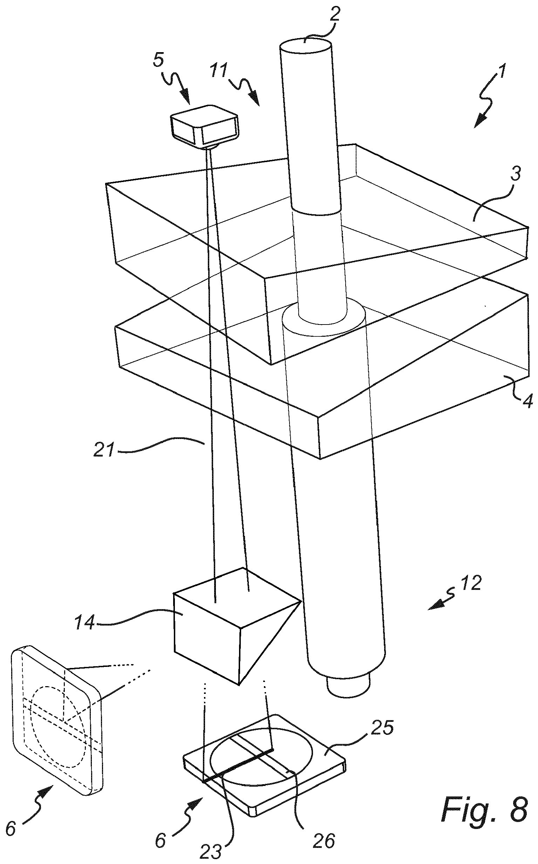

Even further, Fig. 8 illustrates a perspective view of an optical torque sensor 1 comprising a right angle prism 14 in accordance with yet another embodiment of the present invention. The right angle prism 14 is only one example of a plurality of optical building blocks suitable for use in an optical torque sensor 1 according the present invention in order to achieve one or more desirable effects. In more detail, by using the right angle prism 14, the optical torque sensor 1 is more robust in terms of fault tolerances as compared to only using one optical position detector 6. Specifically, it is possible for one of the optical position detectors 6 to malfunction or break down while still rendering the whole optical torque sensor function, i.e. able to measure a torque value applied to the input portion of the shaft 2.

Moreover, the right angle prism 14 can be suitably rotated about its own rotational axis in order to direct the reflected and transmitted light beams to desired locations. For example, by rotating the right angle prism 14 the reflected and transmitted beams may be directed towards the same plane whereby the two optical position sensors 6 may be arranged on the same circuit board. Alternatively, or additionally e.g. dove prisms (not shown) may be used to further rotate or "tilt" one or both of the formed bright lines 23.

Even though the invention has been described with reference to specific exemplifying embodiments thereof, many different alterations, modifications and the like will become apparent for those skilled in the art. Variations to the disclosed embodiments can be understood and effected by the skilled addressee in practicing the claimed invention, from a study of the drawings, the disclosure, and the appended claims. Furthermore, in the claims, the word "comprising" does not exclude other elements or steps, and the indefinite article "a" or "an" does not exclude a plurality.

## Claims

1. An optical torque sensor (1) for measuring a torque on a rotating system having a shaft (2) with an extension axis (101) and including an input portion (11) and an output portion (12), wherein the input portion and output portion are angularly displaced with respect to each other when a rotational torque is applied to the input portion, said torque sensor comprising:
a first wedge prism (3) coupleable to the input portion;
a second wedge prism (4) coupleable to the output portion;
a light source (5) adapted to be fixed relative to the shaft (2) and configured to emit a light beam through the first and second wedge prisms;
an optical position sensor (6, 16, 17) adapted to be fixed relative to the shaft and configured to receive said light beam from the light source through the first and second wedge prisms and to provide a position signal indicative of a position of an incident light spot on said optical position sensor;
control circuitry (30) configured to receive said position signal and to determine a torque value applied to the input portion based on said position signal.

2. The optical torque sensor (1) according to claim 1, wherein, when said shaft (2) is in a resting position, said first wedge prism (3) and said second wedge prism (4) are rotationally offset from an opposed position, said opposed position being defined in that the first and second wedge prisms are misaligned by 180° about a common rotational axis and said light beam is subjected to a minimum deviation when propagating through the first and second wedge prisms; and
wherein said control circuitry is further configured to determine a rotational position of said shaft based on said position signal.

3. The optical torque sensor (1) according to claim 1 or 2, wherein said first wedge prism (3) and said second wedge prism (4) share a common axis (101) with said shaft.

4. The optical torque sensor (1) according to any one of the preceding claims, wherein said optical position sensor (6) is arranged in a focal plane of said light source (5).

5. The optical torque sensor (1) according to any one of the preceding claims, further comprising a reflective member (13) having a reflective surface, and wherein said light source (5) is arranged to emit said light beam towards said optical position sensor (6) via said reflective surface in order to increase a travel distance of said light beam.

6. The optical torque sensor (1) according to any one of the preceding claims, wherein said optical position sensor (6) is a two-dimensional optical detector.

7. The optical torque sensor (1) according to claim 6, wherein said light source (5) is configured such that said incident light spot forms a bright dot on said two-dimensional optical detector, and wherein said optical torque sensor (1) is arranged such that said bright dot (22) follows a circular path on said two-dimensional optical detector during rotation of said shaft.

8. The optical torque sensor (1) according to claim 7, wherein said control circuitry is configured to:
determine a/said torque value based on a radius of said circular path and a rotational positon of said shaft based on a position of said bright dot on said circular path.

9. The optical torque sensor (1) according to any one of claims 1 - 5, wherein said optical position sensor (6) is a one-dimensional optical detector, and wherein said light source is configured such that said incident light spot forms a bright line (23) on said one-dimensional optical detector.

10. The optical torque sensor (1) according to claim 9, wherein said control circuit is configured to determine said torque value based on a position of the bright line on said one-dimensional optical detector, and a rotational positon of said shaft based on an intensity of said bright line.

11. The optical torque sensor (1) according to claim 9 or 10, further comprising a right angle prism (14) arranged along a path of said light beam between said optical position sensor (6) and said first and second wedge prisms in order to split said light beam and direct a split light beam towards a second optical position sensor (6), said second optical position sensor being a second one-dimensional optical detector.

12. The optical torque sensor (1) according to claim 9 or 10, wherein said light source (5) is a first light source configured to emit a first light beam such forming a first bright line and said one-dimensional optical detector is a first one-dimensional optical detector (16), the optical torque sensor further comprising:
a second light source configured to emit a second light beam forming a second bright line on a second one-dimensional optical detector (17), the first and second bright lines being 90° offset relative to each other.

13. A power steering system for turning a set of wheels of a vehicle, said power steering system comprising:
an input element rotational about a first axis;
an output element rotational about said first axis;
a torsion rod connecting said input member to said output member, said torsion rod being adapted to twist about said first axis when a rotational torque is applied to said input member;
a first wedge prism (3) rotationally coupled to the input portion;
a second wedge prism (4) rotationally coupled to the output portion;
an optical position sensor (6) fixed relative to the shaft and configured to receive said light beam from the light source through the first and second wedge prisms and to provide a position signal indicative of a position of an incident light spot on said optical position sensor;
control circuitry (30) configured to receive said position signal and to determine a torque value applied to the input portion based on said position signal.
